# EUROPEAN PATENT SPECIFICATION

(11) **EP 3 923 064 B1**
(45) Date of publication and mention of the grant of the patent: **21.05.2025**
(21) Application number: 20305643.7
(22) Date of filing: 12.06.2020
(51) Int. Cl.: G02F 1/1503, C07D 403/06, C07D 213/803, C07D 213/80, C07D 213/26, C07D 213/22, C07D 213/06, C09K 9/02, G02F 1/1516, E06B 3/67, E06B 9/24, G02C 7/10

(54) **ELECTROCHROMIC SOLUTION**
ELEKTROCHROME LÖSUNG
SOLUTION ÉLECTROCHROMIQUE

(43) Date of publication of application: 15.12.2021
(73) Proprietor: Essilor International, 94220 Charenton-Le-Pont (FR)
(72) Inventor: ARCHAMBEAU, Samuel, 94220 CHARENTON-LE-PONT (FR); BIVER, Claudine, 94220 CHARENTON-LE-PONT (FR); DEBAT BERIT, Fabien, 94220 CHARENTON-LE-PONT (FR); BALLET, Jerôme, 94220 CHARENTON LE PONT (FR); CANO, Jean-Paul, 94220 CHARENTON-LE-PONT (FR)
(74) Representative: Plasseraud IP

(56) References cited:
- JP-A- 2010 085 568
- US-A1- 2017 307 952

## Description

The present invention relates to a novel electrochromic solution comprising a thickening polymer agent having a molecular weight of at least 50,000 g/mol and at least an additive and to the use of such solution as a variable transmittance medium for the manufacture of an optical article, such as optical lenses, optical filters, attenuators, windows, visors, goggles, mirrors and displays.

Electrochromism is a well-known physical phenomenon which is observed with certain classes of chemical compounds that change reversibly colour when a voltage is applied to them. The material undergoes reversible changes in optical properties by oxidation and reduction. Such redox reactions of the compounds provide the "self-erasing" feature to a device. Usually, the electrochromic material may be colourless when an electric field is not applied and may be coloured when an electric field is applied. An electrochromic device, i.e. device containing electrochromic compounds, the absorbance of which depends only on the presence of electric field, can thus have two states, a coloured state (when electrically activated) and a bleached state (in the inactive state). The optical transmission properties of the device depend on the electrochromic compounds.

Electrochromic systems may be applied to various applications. For instance, in the ophthalmic field, electrochromic lenses may enable the user to actively control the darkening of the lens under some illumination conditions, so as to provide ocular protection, and commute rapidly when these conditions change, contrary to photochromic lenses which passively darken under UV radiation and furthermore require some time to bleach again when the UV radiation stops. Moreover, photochromic dyes are usually incorporated into ophthalmic lenses by an imbibition (or impregnation) process which is not suited for any ophthalmic substrate. Electrochromic glasses have also been used in the manufacture of "smart windows" or rear-view mirrors. Usually, all these electrochromic devices are made from an electrochromic composition comprising, besides electrochromic compounds, a solvent. This is referred to as an electrochromic solution.

In the case of electrochromic self-erasing solutions, there are two issues that need to be managed: coloration segregation and current leakage.

The coloration segregation problem emerges from the continuous operation of the electrochromic system for long periods of time. When first bleached by removal of the electrical energy after prolonged operation or coloration, bleaching in the device is often non-uniform. This issue is visually perceived in the form of segregated colored bands that are slow to dissipate near the transparent electrical elements present within the electrochromic system. The segregation is thus due to migration and convection of the coloring species which remain adjacent to said electrical elements. The appearance of such colored bands is unacceptable from an aesthetic, commercial and functional point of view since the definition of the visual information gathered by the user from a device containing the electrochromic system is impaired.

Differences in solubility between the colored and uncolored forms of any of the coloring species may also contribute to segregation. This form of segregation is particularly noticeable in electrochromic devices whose major plane is non-horizontal when in use such as is experienced with rearview mirrors on automobiles, wall mirrors, building windows, automotive front, rear and side windows, optical lenses, eye glasses and the like. In their colored form, either or both of the coloring species may fully or partially phase separate of the electrochromic solution depending on their solubilities, and may float or sink according to their densities relative to that of the host solvent.

Yet another problem encountered in electrochromic self-erasing devices relates to current leakage. When the electrochromic cell is colored by the application of voltage, the colored species of the redox pair continually tend to recombine and return to their equilibrium, which is the colorless condition. The rate of recombination of the colored species within the bulk of the solution is linked to their diffusion coefficient in the solvent used. In order to compensate for the tendency of the colored species to recombine and go to the colorless equilibrium state, current must continually leak into the electrochromic solution via the conductive electrodes that typically sandwich said solution.

Because current must flow across the conductive surface of the transparent electrical elements used on at least one of the substrates that sandwich the electrochromic cell, and because these transparent electrical elements have finite sheet resistance, applied potential will be highest adjacent to the connectors typically located at an edge perimeter of the cell and will be lowest near the center of the device as current passes across the conductive glass surface to color remote regions.

Thus, if the leakage current is high, the potential drop that ensues across the transparent conductor itself results in a lower potential being applied to remote regions. Coloration is therefore non-uniform. The edge regions nearest the electrical elements color deepest and the central regions color lightest. Such a coloration gradient is not acceptable and there is therefore a need to ensure that deep coloring is uniform throughout the solution.

Furthermore, the leakage current needs to be as low as possible so that the current consumption also becomes as low as possible. A low current consumption is of great importance due to the small size of the battery used in a device to supply the electrochromic system. In case of ophthalmic lenses, this battery has to be as small as possible for both cosmetic and ergonomic considerations.

However, a low leakage current has an incidence on the bleaching rate. The bleaching rate is the time an electrochromic device takes to return from the full or partial colored state to the substantially clear, uncolored state. Lowering the leakage current leads to a concomitant slowing of the bleach rate, which is also unacceptable from a commercial point of view.

In order to achieve the above-mentioned commercially desired devices, there is a need to strike a balance between depth of coloration, coloration uniformity and a relatively rapid bleach rate.

While the addition of only one thickening agents such as polymethylmethacrylate (PMMA) might be effective in that it increases the viscosity of the electrochromic solution and helps reduce segregation, such agents are known to be disadvantageous because they lower the current leakage and, simultaneously decrease the bleach rate. One problem with adding only one thickener is that the solution can become so viscous that process to make an electrochromic device becomes industrially unfeasible

Document US5145609 describes an electrochromic solution containing a polyether polymer in a propylene carbonate solvent. It was found that adding a linear polyether polymer such as polyethylene oxide (PEO) instead of a polymethylmethacrylate (PMMA), segregation effects may be removed with a limited decrease of the leakage current, and thus a limited increase of the bleaching rate. However, neither of these polymers shows a satisfactory solubility in a propylene carbonate solvent. While low molecular weight PEO is not soluble in propylene carbonate, PMMA may be soluble but solubilization takes a long time at room temperature, rendering them both not attractive.

Document US5142407 describes an electrochromic solution containing cyanoethylsucrose in a propylene carbonate solvent. By replacing polymethylmethacrylate with cyanoethylsucrose, whose solubility in propylene carbonate is higher, there is an improvement in uniformity of coloration, a decrease in segregation and a limited decrease of the leakage current. However, the viscosity of electrochromic solutions obtained according to this document is generally less than 100 centiStokes (cSt) measured at 25°C, such value being too low to completely avoid the segregation effect. Furthermore, cyanoethylsucrose is a yellow-colored liquid, making it unsuitable for the production of transparent articles.

There is thus a need for obtaining improved electrochromic solutions in order to be used as transparent homogenous media for forming high quality articles, in particular high quality ophthalmic lenses, wherein said solutions show a low segregation effect on the one side as well as a rather high bleaching rate and low leakage current obtained from a low recombination of the colored species within the bulk of the solution on the other side, and wherein these solutions are sufficiently viscous, preferably showing a viscosity of less than 3000 cP at 25°C, rendering the obtained solution suitable for the production of electrochromic devices.

After concluding extensive research, according to a first aspect, the present inventors provide an electrochromic solution comprising:
- a solvent;
- a thickening polymer agent having a molecular weight of at least 50,000 g/mol, preferably of at least 200,000 g/mol, more preferably of at least 250,000 g/mol;
- at least an additive having a molecular weight between 300 and 50,000 g/mol, preferably between 320 and 20,000 g/mol; preferably said additive being in liquid state;
- a redox chemical mixture in solution in said solvent said mixture being constituted of at least one electrochromic reducing compound and at least one electrochromic oxidizing compound, and which colors in the presence of an applied voltage and which bleaches to a colorless condition in the absence of an applied voltage.

The simultaneous use of such thickening agent together with at least an additional additive within the electrochromic solution helps reduce the segregation effect while keeping the viscosity less than 3000 cP at 25°C.

While the use of a high molecular weight compound (i.e. the thickening polymer agent) helps avoid the phase separation problems, the use of a low molecular weight compound (i.e. the additive) helps manage the current consumption problems.

Document JP 2010 085568 describes an electrochemical device which might contain electrochromic compounds. This document makes no mention of the importance of the molecular weight of the polymers added within the electrochemical device.

The solvent used in the electrochromic solution according to the invention is an inert solvent selected from, but not limited to ethylene carbonate, propylene carbonate, γ-butyrolactone, γ-valerolactone, acetronitrile, propionitrile, benzonitrile, glutaronitrile, methylglutaronitrile, dimethylformamide, N-methylpyrrolidone, sulfolane, 3-methyl sulfolane, methyl propionate, ethylene glycol, ethylene carbonate, propylene glycol diacetate, propylene glycol methyl ether acetate, ionic liquids, and mixtures thereof. Preferably the solvent is propylene carbonate.

The present invention relates more particularly to an electrochromic solution wherein the thickening polymer agent is electrochemically inert and soluble in the solvent used. The thickening polymer agent useful for the present invention has a molecular weight of at least 50,000 g/mol, preferably of at least 200,000 g/mol, more preferably of at least 250,000 g/mol and of at most 1,000,000 g/mol, preferably at most 800,000 g/mol, more preferably of at most 650,000 g/mol.

Preferably, the thickening polymer agent is a vinyl acetate polymer, said vinyl acetate polymer having a molecular weight of at least 50,000 g/mol, preferably of at least 200,000 g/mol, more preferably of at least 250,000 g/mol, preferably of at least 300,000 g/mol, more preferably of at least 350,000 g/mol, even more preferably of at least 400,000 g/mol and of at most 1,000,000 g/mol, preferably at most 800,000 g/mol, more preferably of at most 650,000 g/mol.

More preferably, the solvent is propylene carbonate and the thickening polymer agent is a vinyl acetate polymer having a molecular weight of at least 200,000 g/mol, preferably of at least 250,000 g/mol.

One preferred example of thickening polymer useful for the present invention is the vinyl acetate polymer (PVAC or Polyvinyl acetate) sold under the name Vinnapas UW25FS sold by Wacker having a molecular weight of 540,000 g/mol measured by Size Exclusion Chromatography (SEC).

The electrochromic solution further comprises an additive chosen from an ester derivative of benzoic acid or an ester derivative of phthalic acid or a mixture thereof.

As in the case of the thickening polymer agent, the additive also has to be soluble in the solvent used and electrochemically inert, preferably with an electrochemical window higher than 2V.

The molecular weight of the additive is between 300 and 50,000 g/mol. Preferably its molecular weight is higher than 400 g/mol. It has been observed that an additive having a molecular weight higher than 300 g/mol is efficient for reducing leakage current.

Preferably its molecular weight is lower than 20,000 g/mol, lower than 18,000 g/mol, even more preferably lower than 15,000 g/mol or even more lower than 10,000 g/mol.

The additive may be in the liquid or solid form. Preferably, the additive is in the liquid form.

According to an embodiment, the additive is chosen from an ester derivative of benzoic acid of formula (I) or (II)

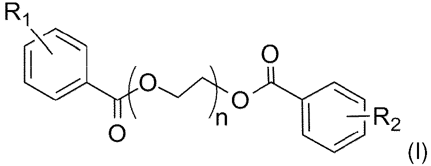

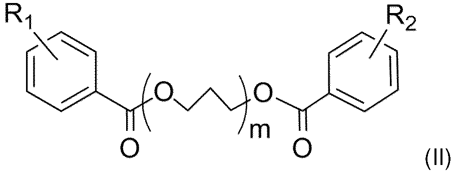

R₁ and R₂ are similar or different and are selected from H, optionally substituted alkyl (such as optionally substituted arylalkyl), optionally substituted aryl, and optionally substituted cycloalkyl.

The groups or radicals defined hereinabove may be substituted by one or more substituents such as, for example, halogen, alkyl, alkoxy, aryl, heteroaryl, haloalkyl, haloalkoxy, alkoxycarbonyl, alkanoyl, aroyl, formyl, nitrile, nitro, amido, alkylthio, alkylsulfinyl, alkylsulfonyl, arylthio, arylsulfinyl, arylsulfonyl, amino, alkylamino, arylamino, dialkylamino and diarylamino.

The expression "alkyl" represents any monovalent radical of a linear or branched hydrocarbon chain comprising 1 to 18 carbon atoms. Examples of C1-C18 alkyl groups include C1-C4 alkyl groups such as methyl, ethyl, n-propyl, i-propyl, n-butyl, i-butyl, s-butyl or t-butyl, C6-C8 alkyl groups such as n-hexyl, n-heptyl or n-octyl, as well as n-pentyl, 2-ethylhexyl, 3,5,5-trimethylhexyl, n-nonyl, n-decyl, n-undecyl, n-dodecyl or n-octadecyl.

The expression "cycloalkyl" represents any monovalent radical of a monocyclic or bicyclic 3 to 12 membered saturated carbocycle. Examples of C3-C12 cycloalkyl groups include cyclopropyl, cyclopentyl and cyclohexyl.

The expression "aryl" represents any monovalent radical of an aromatic hydrocarbon comprising 6 to 18 carbon atoms. Examples of C6-C18 aryl groups include phenyl, naphthyl, anthracenyl and phenanthrenyl.

The expression "arylalkyl" represents for instance benzyl or phenyl (C2-C7 alkyl).

Preferably both R₁ and R₂ are hydrogen atoms.

In the above-mentioned formula (I), n is an integer ranging from 1 to 10, preferably from 1 to 7, more preferably from 1 to 4.

In the above-mentioned formula (II), m is an integer ranging from 1 to 10, preferably from 1 to 7, more preferably from 1 to 4.

Still in this embodiment, the additive is preferably selected from a list of ester derivatives of benzoic acid consisting of polypropylene glycol dibenzoate (PPGDB) such as dipropylene glycol dibenzoate (DPGDB) and tripropylene glycol dibenzoate (TPGDB), polyethylene glycol dibenzoate (PEGDB) such as diethylene glycol dibenzoate (DEGDB) and triethylene glycol dibenzoate (TEGDB) and mixture thereof.

The dipropylene glycol dibenzoate (DPGDB) that may advantageously be used is for example the one sold under the name Plaxter B271 by COIM.

The polyethylene glycol dibenzoate (PEGDB) that may advantageously be used is for example the one sold by Sigma Aldrich having a molecular weight of 410 g/mol and a boiling point of 217°C.Compounds containing a glycol unit and an aromatic unit are particularly advantageous. The glycol unit helps increase the solubility of the additive in the solvent used and the presence of the aromatic unit helps increase the boiling point.

Alternatively, the additive can be selected from a list of ester derivatives of phthalic acid consisting of bis (2-ethylhexyl phthalate) (DEHP), diisononyl phthalate (DINP), di n-octyl phthalate (DNOP), diisodecyl phthalate (DIDP), dipropylheptyl phthalate (DPHP), di-2-ethylhexyl terephthalate (DOTP or DEHT) and mixture thereof.

In another embodiment, the additive can be selected from a list of glycol derivatives such as polyethylene glycol diacrylate (or methacrylate), polyethylene glycol diepoxy, polypropylene glycol diacrylate (or methacrylate), polypropylene glycol diepoxy and mixture thereof, provided that the molecular weight of said additive is between 300 and 50,000 g/mol.

Alternatively, the additive can be selected from a list of low molecular weight polymers (<50,000) such as Poly(methyl methacrylate) (PMMA), Polyvinyl acetate (PVA, PVAc, PVAC or poly(ethenyl ethanoate), Polyvinyl butyral (PVB), Cellulose acetate butyrate (CAB) and mixture thereof, provided that the molecular weight of said additive is between 300 and 50,000 g/mol.

According to an embodiment, the electrochromic solution may comprise at least two additives independently chosen from one of the above-mentioned ester derivatives of benzoic acid, one of the above-mentioned ester derivatives of phthalic acid, one of the above-mentioned glycol derivatives or one of the above-mentioned low molecular weight polymers, such as for example a mixture of one derivative of benzoic acid and one glycol derivative, a mixture of at least two ester derivatives, or a mixture of at least two glycol derivatives, provided the at least two additives are well miscible.

The content of the additive is from 5 to 60 wt%, preferably from 10 to 30 wt%, more preferably from 15 to 25 wt% by weight relative to the total weight of the electrochromic solution.

The content of the thickening polymer agent is from 1 to 30 wt%, preferably from 3 to 20 wt%, more preferably from 5 to 15 wt% by weight relative to the total weight of the electrochromic solution.

The viscosity of said electrochromic solution is not greater than 3000 cP at 25°C, preferably not greater than 2500 cP at 25°C, even more, preferably less than 2000 cP at 25°C. A too high a viscosity is not desirable since it leads to longer filling processes of the electrochromic solution within the end device, which is not desirable from an industrial point of view.

It is thus preferable to keep the solid content of the electrochromic solution (i.e thickening polymer, additive, electrochromic compounds) as low as possible, preferably less than 45 weight (wt%) relative to the total weight of the solution, even more preferably less than 30 wt% relative to the total weight of the solution.

In a preferred embodiment, the electrochromic solution is liquid. For the same reason, as mentioned above, liquid additives are preferred.

Another factor that influences the length of the said filing processes is the melting point of the electrochromic solution. In order to avoid long filling processes, the melting point of the solution needs to be kept at less than -20°C.

According to a preferred embodiment, the thickening polymer agent is a vinyl acetate polymer present from 5 to 15 wt% by weight relative to the total weight of the electrochromic solution and the additive is polypropylene glycol dibenzoate or polyethylene glycol dibenzoate present from 15 to 25 wt% by weight relative to the total weight of the electrochromic solution.

The at least one reducing compound of the solution of the present invention is not particularly limited. The at least one reducing compound is not necessarily an electrochromic compound; however, it should be chosen among compounds having at least the following properties: low absorption of visible light in the bleached state (if the reducing compound is also an electrochromic compound), good stability, in particular to oxygen, and good solubility in conventional electrochromic solvents such as propylene carbonate.

Preferably, the at least one electrochromic reducing compound is selected from ferrocene and their derivatives such as ethyl ferrocene, t-butyl ferrocene, phenoxazine and their derivatives, such as N-benzylphenoxazine, phenazine and their derivatives, such as 5,10-dihydrophenazine, N,N,N',N'-tetramethyl-p-phenylenediamine, phenothiazine and their derivatives, such as 10-methylphenothiazine and isopropylphenothiazine; thioanthrene; and tetrathiafulvalene. Preferably, the electrochromic reducing compound is 10-methylphenothiazine.

The at least one electrochromic oxidizing compound of the solution of the present invention is not particularly limited. The at least one electrochromic oxidizing compound is selected from mono viologens or bis viologens (i.e 4,4'-bipyridinium salts or bis[4,4'-bipyridinium] salts) such alkylviologens, arylviologens, arylalkylviologens, alkylarylviologens, or anthraquinones and derivatives thereof.

Non limiting examples of such viologen compounds or viologen derivatives, more particularly examples of substituted dialkyl, diaryl 4,4'-bipyridinium salts, substituted dialkyl, diaryl bis[4,4'-bipyridinium] salts and mixtures thereof are described in documents EP2848667A1, EP2848668A1, EP2848669A1, EP2848670A1, EP3115433A1 and EP3345981A1. Preferred examples are mentioned herein.

The at least one electrochromic oxidizing compound may be ethylviologen diperchlorate.

In one preferred embodiment, the electrochromic solution comprises at least one reducing compound, preferably one reducing compound (such as 10-methylphenothiazine) and at least one electrochromic oxidizing compound, preferably at least two electrochromic oxidizing compounds, for example two or three electrochromic oxidizing compounds, preferably each electrochromic oxidizing compound being independently selected from substituted dialkyl 4,4'-bipyridinium salts, substituted diaryl 4,4'-bipyridinium salts, substituted dialkyl bis[4,4'-bipyridinium] salts or substituted diaryl bis[4,4'-bipyridinium] salts, more preferably the at least two electrochromic oxidizing compounds being at least a substituted diaryl 4,4'-bipyridinium and at least a substituted diaryl bis[4,4'-bipyridinium].

Preferably, the at least one oxidizing compound is selected or the at least two electrochromic oxidizing compounds are independently selected from the series of the following compounds.

| Compound | Formula |
|---|---|
| I-1 | 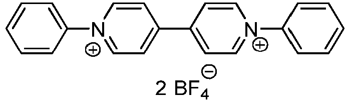 |
| I-2 | 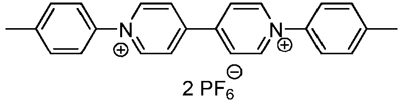 |
| I-3 | 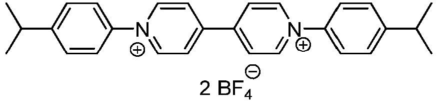 |
| I-4 | 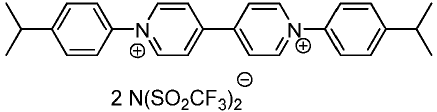 |
| I-5 | 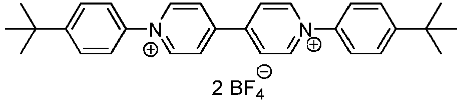 |
| I-6 | 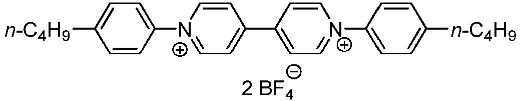 |
| I-7 | 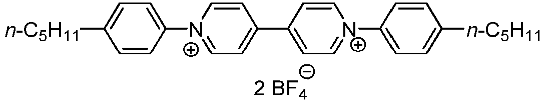 |
| I-8 | 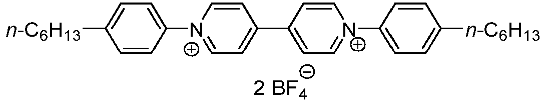 |
| I-9 | 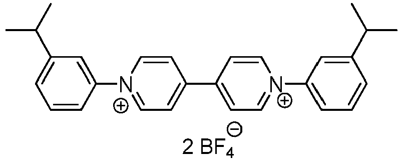 |
| I-10 | 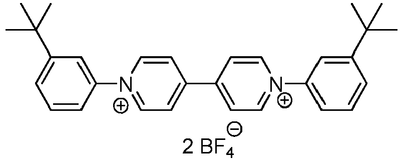 |
| I-11 | 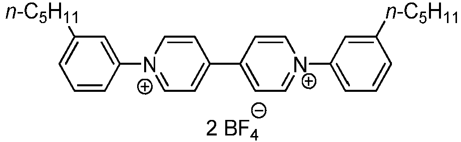 |
| I-12 | 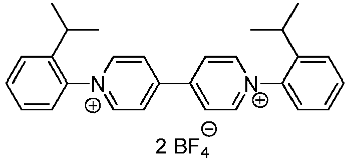 |
| I-13 | 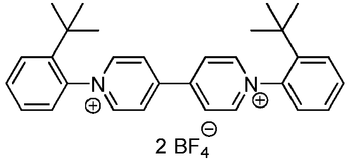 |
| I-14 | 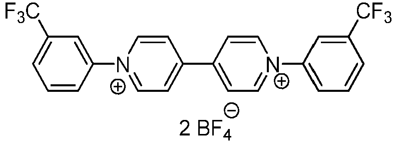 |
| I-15 | 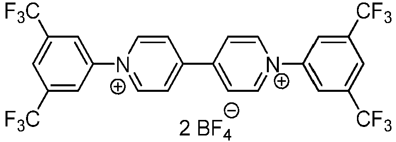 |
| I-16 | 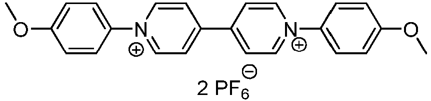 |
| I-17 | 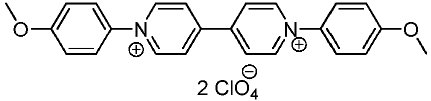 |
| I-18 | 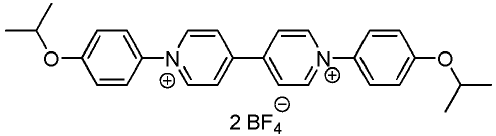 |
| I-19 | 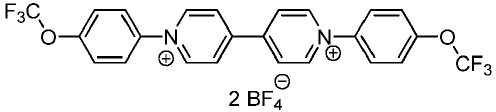 |
| I-20 | 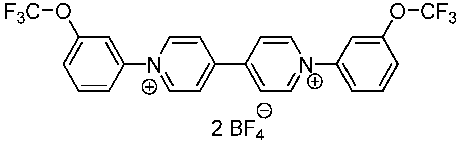 |
| I-21 | 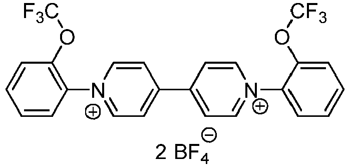 |
| I-22 | 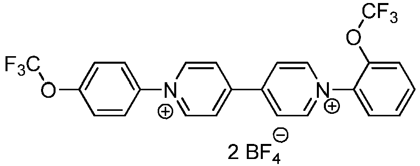 |
| I-23 | 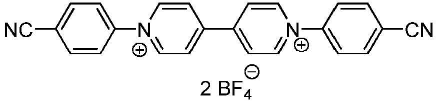 |
| I-24 | 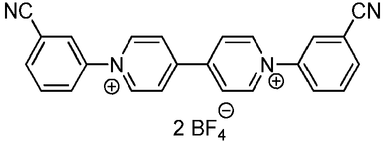 |
| I-25 | 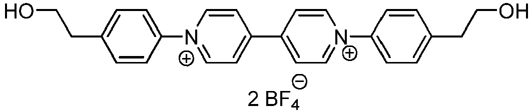 |
| I-26 | 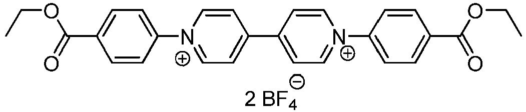 |
| I-27 | 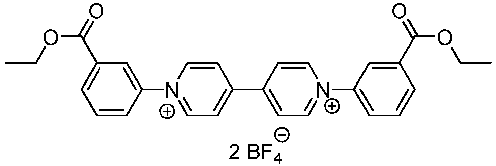 |
| I-28 | 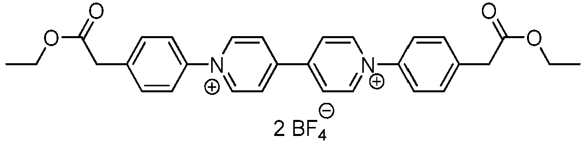 |
| I-29 | 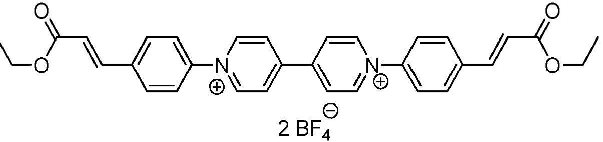 |
| I-30 | 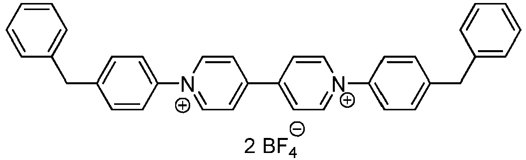 |
| I-31 | 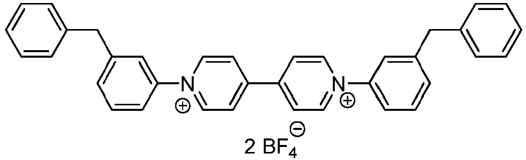 |
| I-32 | 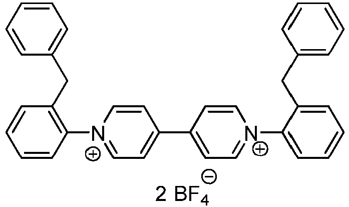 |
| I-33 | 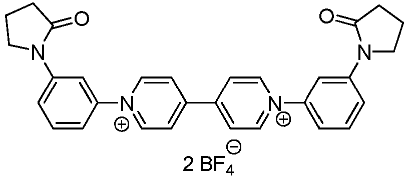 |
| I-34 | 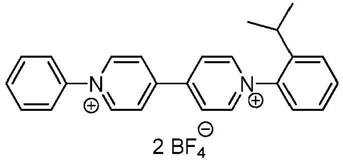 |
| I-35 | 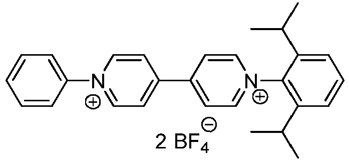 |
| I-36 | 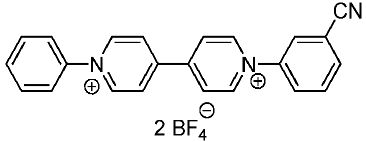 |
| I-37 | 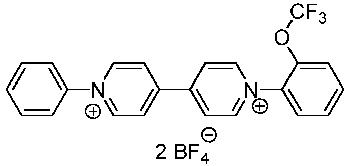 |
| I-38 | 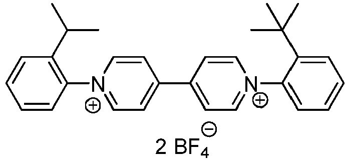 |
| I-39 | 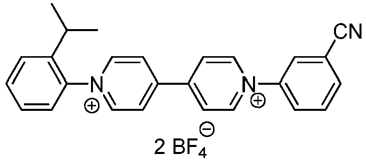 |
| I-40 | 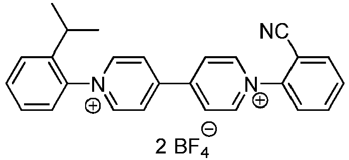 |
| I-41 | 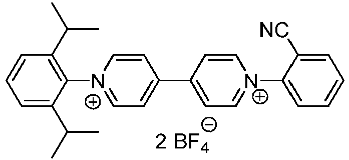 |
| I-42 | 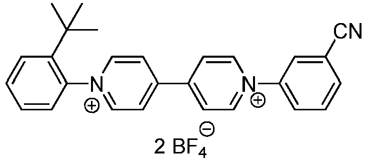 |
| I-43 | 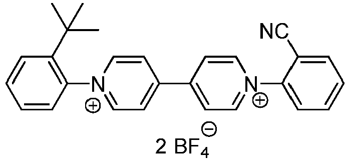 |
| I-44 | 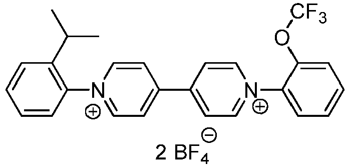 |
| I-45 | 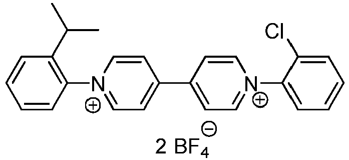 |
| I-46 | 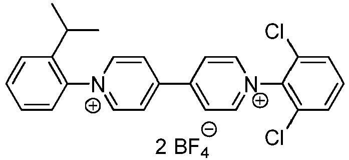 |
| I-47 | 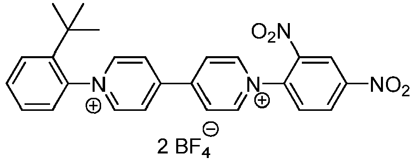 |
| I-48 | 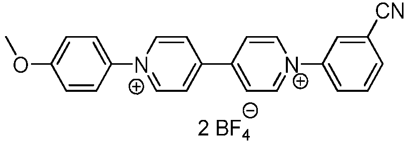 |
| I-49 | 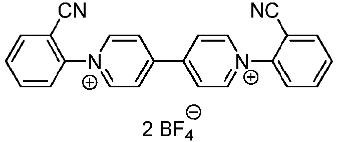 |
| I-50 | 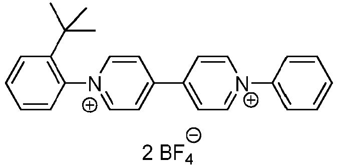 |
| II-1 | 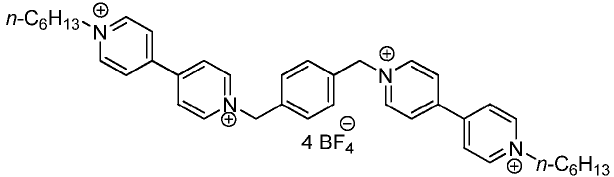 |
| II-2 | 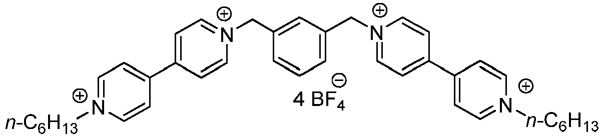 |
| II-3 | 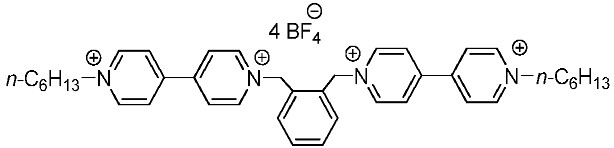 |
| II-4 | 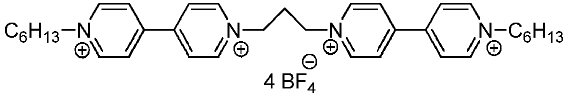 |
| II-5 | 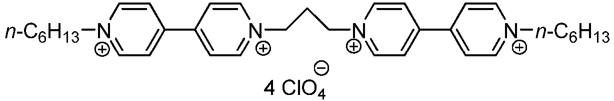 |
| II-6 | 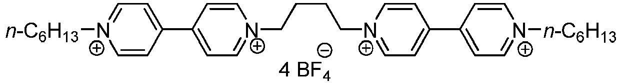 |
| II-7 | 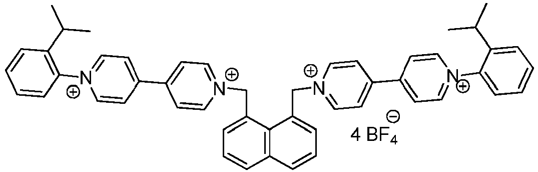 |
| II-8 | 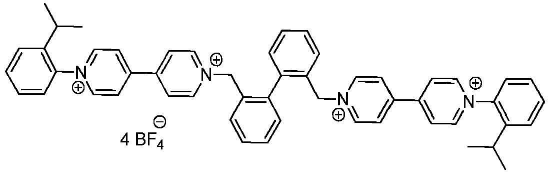 |
| II-9 | 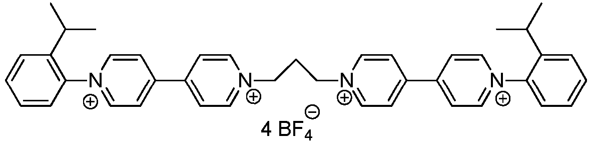 |
| II-10 | 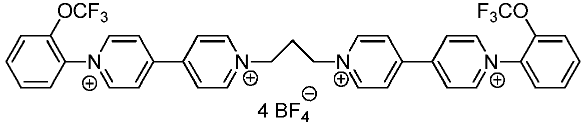 |
| II-11 | 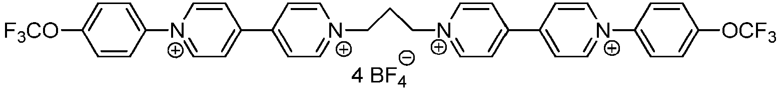 |
| II-12 | 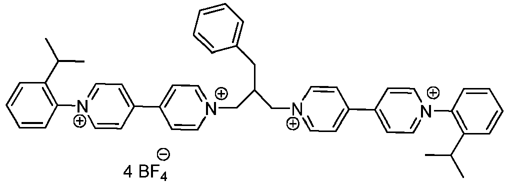 |
| II-13 | 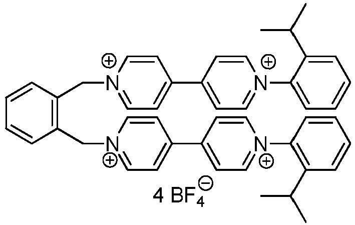 |
| II-14 | 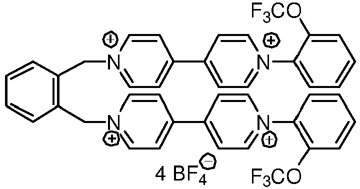 |
| II-15 | 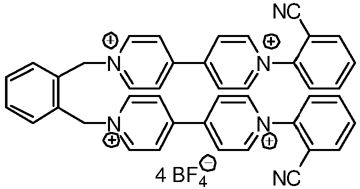 |
| II-16 | 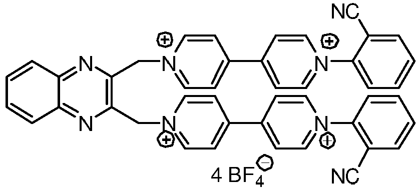 |
| II-17 | 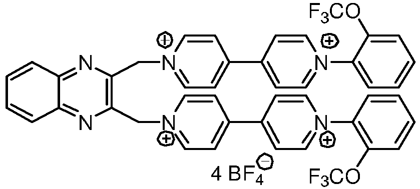 |
| II-18 | 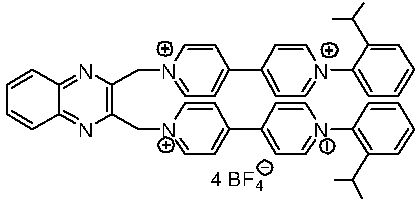 |
| III-1 | 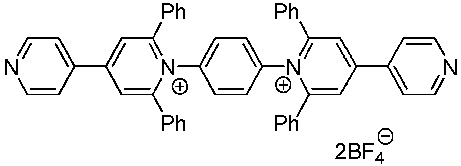 |
| III-2 | 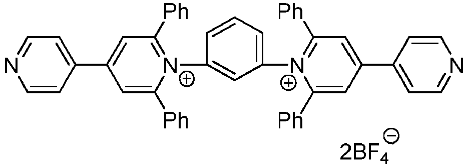 |
| III-3 | 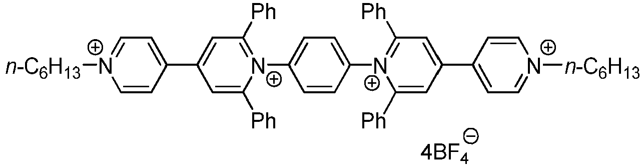 |
| III-4 | 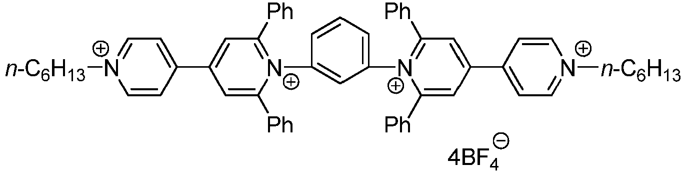 |
| III-5 | 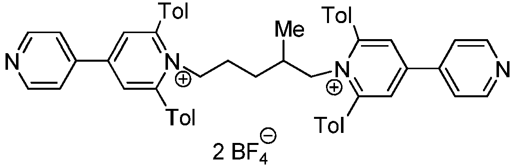 |
| III-6 | 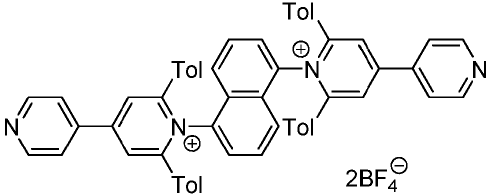 |
| III-7 | 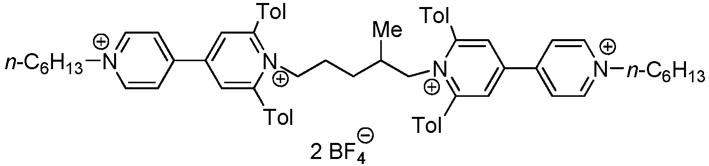 |
| III-8 | 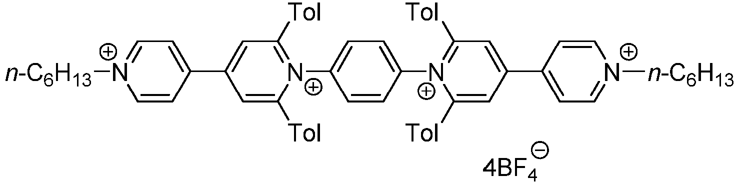 |
| III-9 | 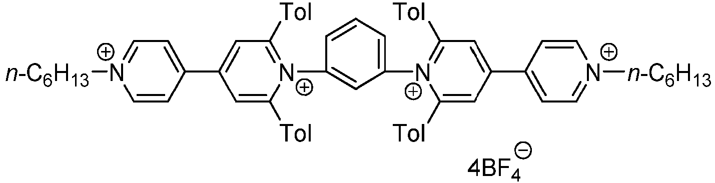 |
| III-10 | 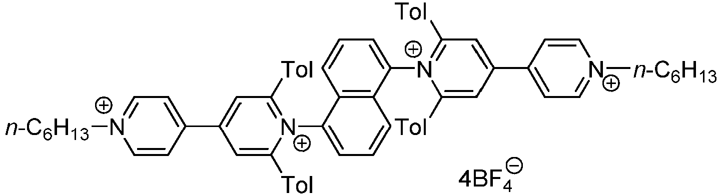 |
| III-11 | 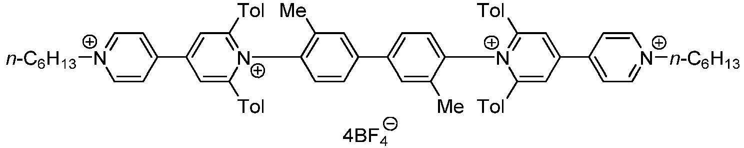 |
| III-12 | 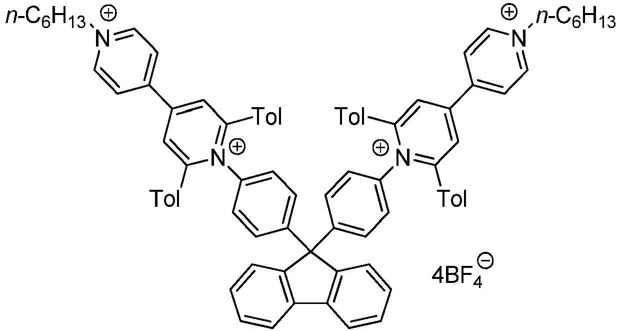 |
| III-13 | 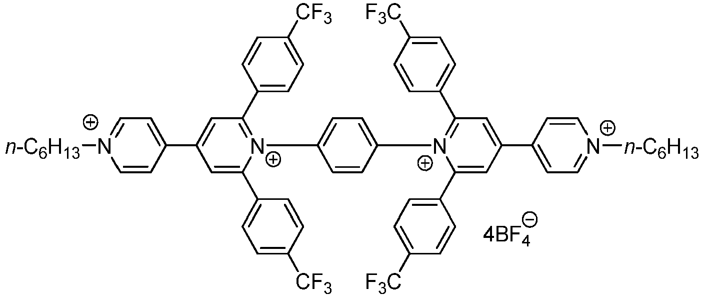 |
| III-14 | 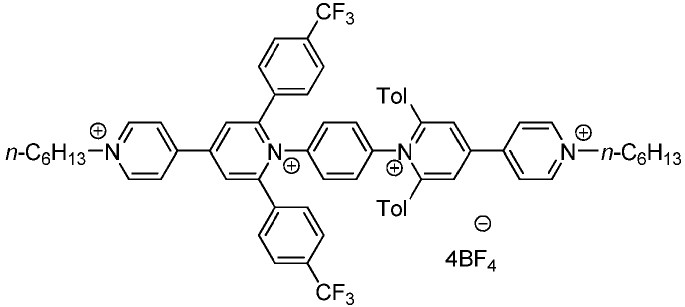 |

More preferably, the at least one electrochromic oxidizing compound is selected or the at least two electrochromic compounds are selected from the series of the following compounds.

| Compound | Formula |
|---|---|
| I-1 | 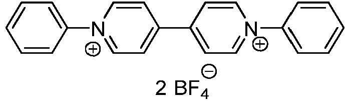 |
| I-2 | 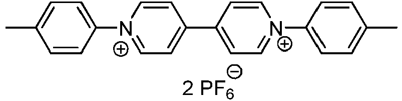 |
| I-3 | 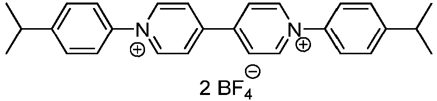 |
| I-4 | 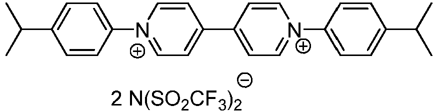 |
| I-5 | 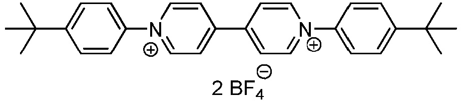 |
| I-6 | 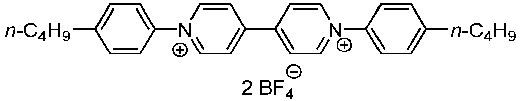 |
| I-7 | 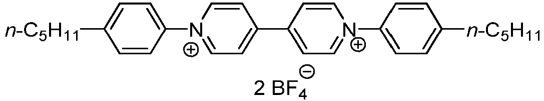 |
| I-8 | 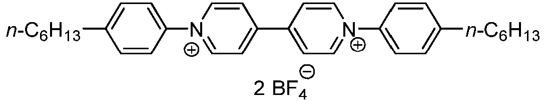 |
| I-9 | 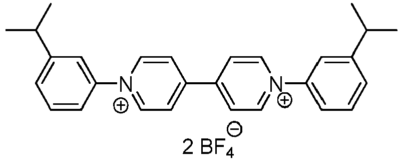 |
| I-10 | 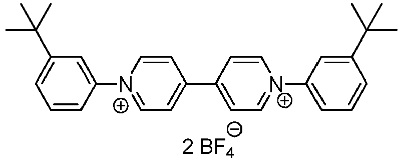 |
| I-11 | 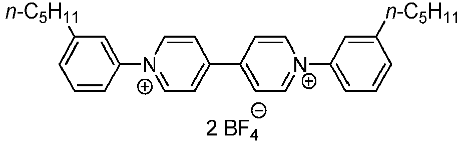 |
| I-12 | 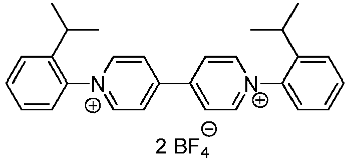 |
| I-13 | 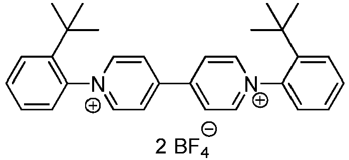 |
| I-14 | 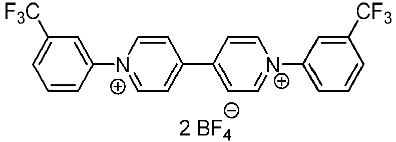 |
| I-16 | 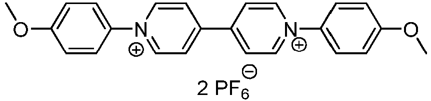 |
| I-17 | 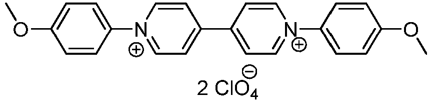 |
| I-18 | 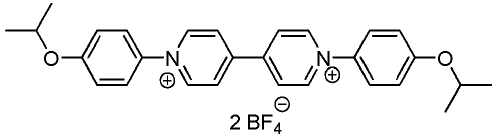 |
| I-19 | 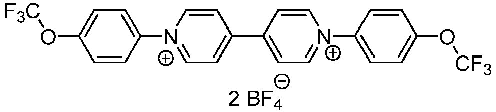 |
| I-20 | 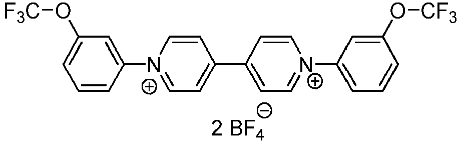 |
| I-21 | 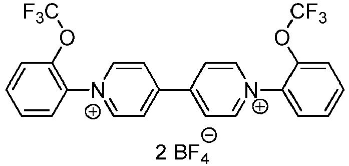 |
| I-22 | 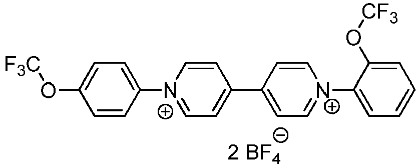 |
| I-23 | 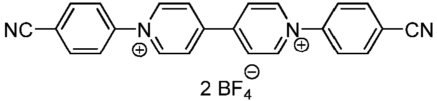 |
| I-24 | 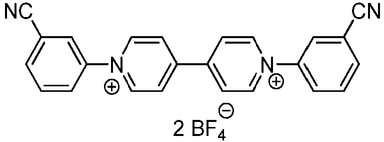 |
| I-26 | 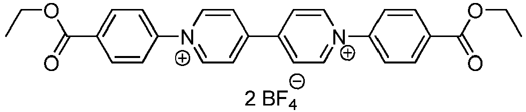 |
| I-27 | 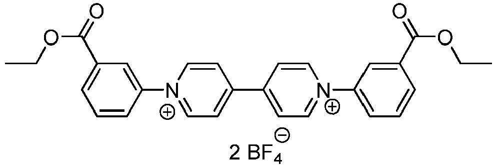 |
| I-28 | 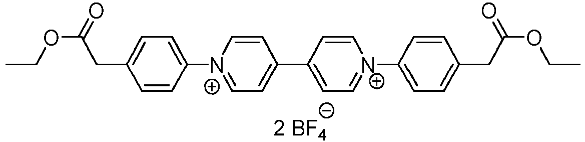 |
| I-29 | 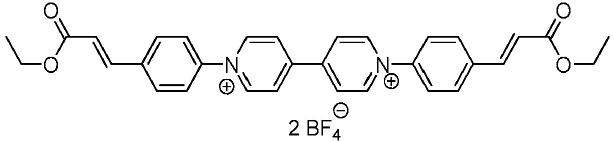 |
| I-30 | 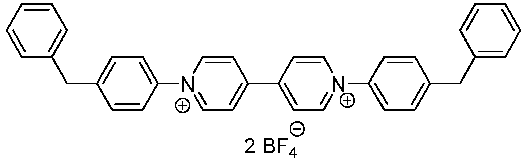 |
| I-31 | 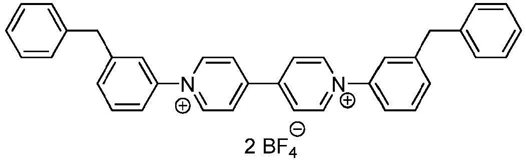 |
| I-32 | 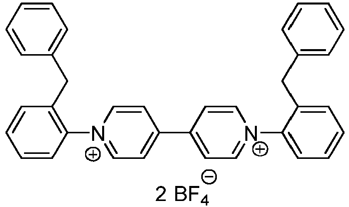 |
| I-34 | 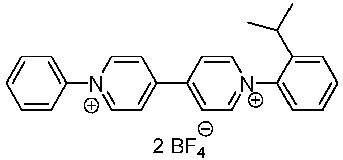 |
| I-35 | 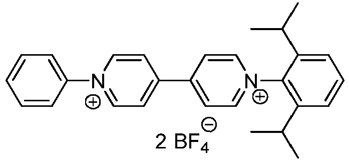 |
| I-36 | 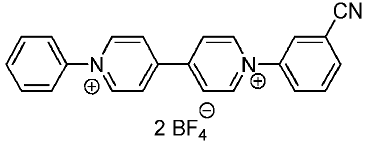 |
| I-37 | 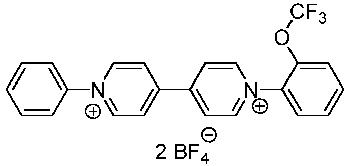 |
| I-38 | 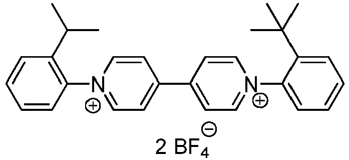 |
| I-39 | 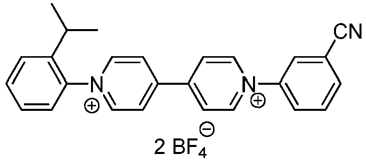 |
| I-40 | 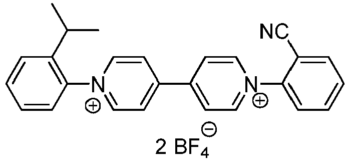 |
| I-41 | 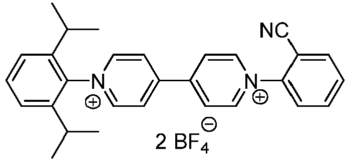 |
| I-42 | 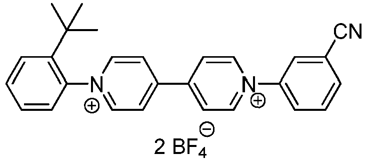 |
| I-43 | 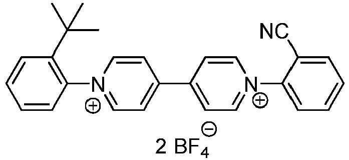 |
| I-44 | 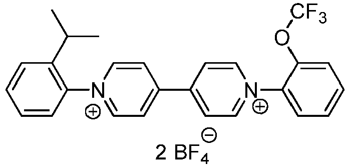 |
| I-48 | 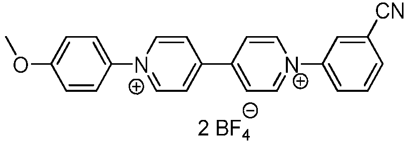 |
| I-49 | 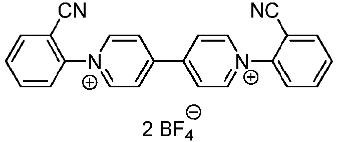 |
| I-50 | 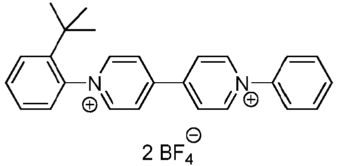 |
| II-1 | 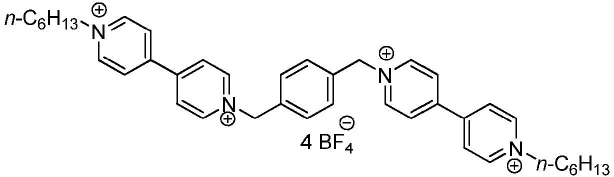 |
| II-2 | 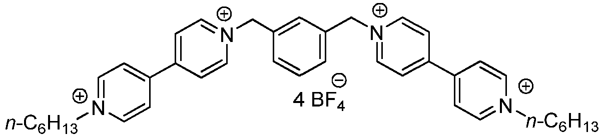 |
| II-3 | 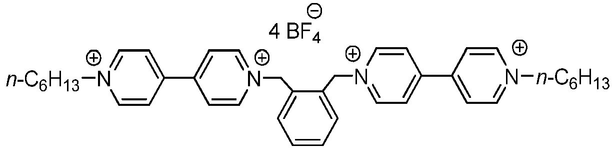 |
| II-4 | 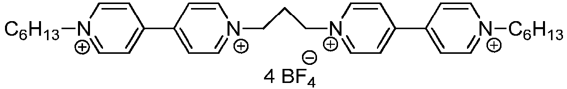 |
| II-5 | 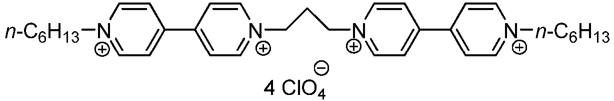 |
| II-6 | 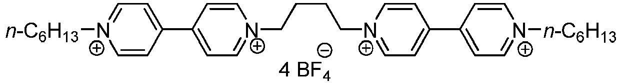 |
| II-7 | 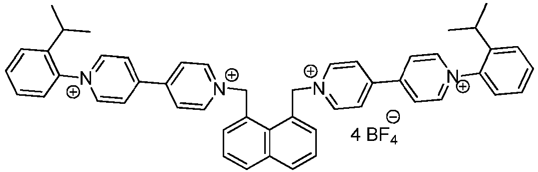 |
| II-8 | 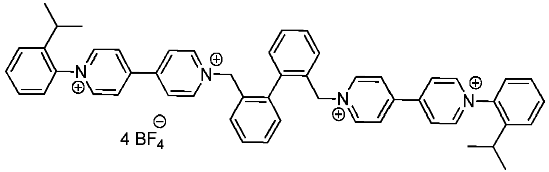 |
| II-9 | 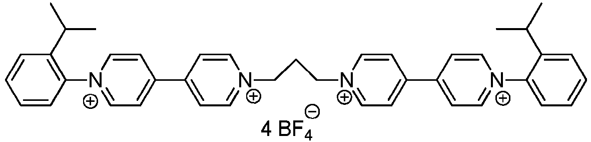 |
| II-10 | 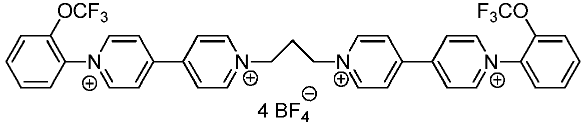 |
| II-11 | 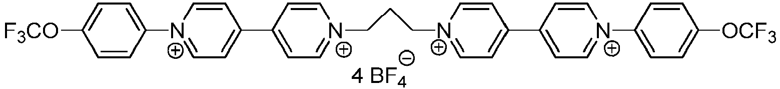 |
| II-12 | 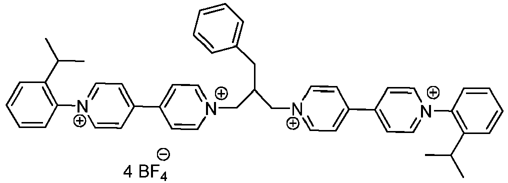 |
| II-13 | 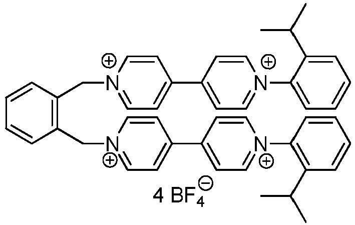 |
| II-14 | 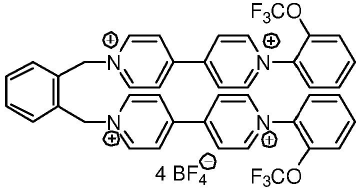 |
| II-15 | 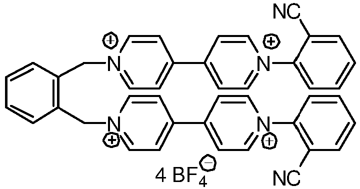 |

In one particularly preferred embodiment, the redox chemical mixture is constituted of:
- one reducing compound and
- at least one electrochromic oxidizing compound, preferably at least two electrochromic oxidizing compounds,
said at least one electrochromic oxidizing compound, being either a compound of formula la or a compound of formula IIa and said at least two electrochromic oxidizing compounds being chosen from the group consisting of compounds of formula la and compounds of formula IIa

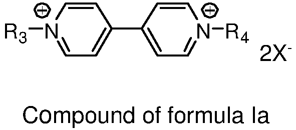

With R³ and R⁴ independently selected from:

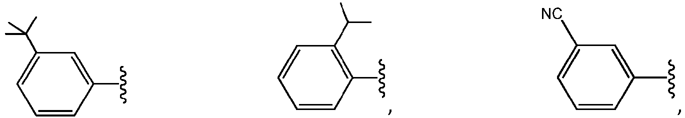

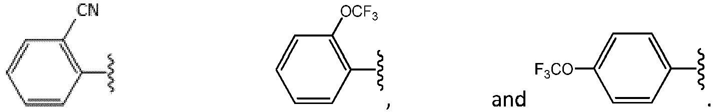

And X⁻ is a counterion selected from halide, tetrafluoroborate, tetraphenylborate, hexafluorophosphate, nitrate, methanesulfonate, trifluoromethane sulfonate, toluene sulfonate, hexachloroantimonate, bis(trifluoromethanesulfonyl)imide, perchlorate, acetate and sulfate. 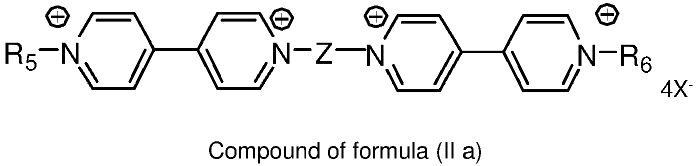
wherein Z is -CH₂-, -(CH₂)₂-, -(CH₂)₃-, -(CH₂)₄-, -(CH₂)₅-, -CH₂-CH(CH₃)-CH₂-, -CH₂-CH(CH₂Phenyl)-CH₂-, -(CH₂)₂-CH(CH₃)-CH₂-, -(CH₂)₃-CH(CH₃)-CH₂-, -(CH₂)₂-and CH(CH₃)-(CH₂)₂-,
and R⁵ and R⁶ are selected from alkyl and optionally substituted phenyl groups, preferably substituted phenyl groups independently selected from:

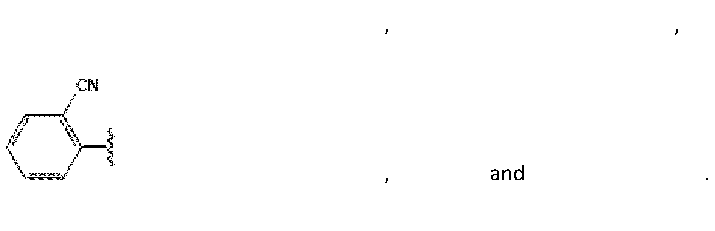

According to a preferred embodiment, the redox chemical mixture is chosen from the mixture constituted of 10-methylphenothiazine and of at least two electrochromic oxidizing compounds chosen from the group consisting of compounds of formula I-10 and II-10 and I-38 and II-10.

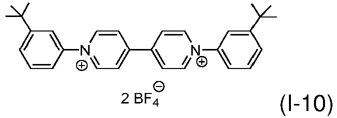

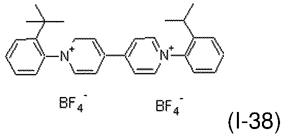

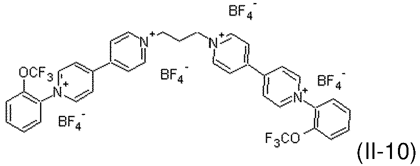

The composition of the invention may further comprise an inert current-carrying electrolyte. The inert current-carrying electrolyte should be compatible with the other components of the composition. In particular, the inert current-carrying electrolyte should not react with the electrochromic compounds.

Examples of inert current-carrying electrolyte include, but are not limited to, alkali metal salts, lithium, sodium or tetraalkylammonium salts, aluminium chloride and aluminium boride, persulfates and bis(fluorosulfonyl)imide. The inert current-carrying electrolyte is preferably selected from sodium, lithium and tetraalkylammonium ions in combination with inert anion selected preferably from chloride, tetrafluoroborate, hexafluoroborate and perchlorate.

Other examples of inert anions are tetraphenylborate, cyano-triphenylborate, tetramethoxyborate, tetrapropoxyborate, tetraphenoxyborate, perchlorate, chloride, nitrate, sulphate, phosphate, methanesulphonate, ethanesulphonate, tetradecanesulphonate, pentadecanesulphonate, trifluoromethanesulphonate, perfluorobutanesulphonate, perfluorooctanesulphonate, benzenesulphonate, chlorobenzenesulphonate, toluenesulphonate, butylbenzenesulphonate, tert-butylbenzenesulphonate, dodecylbenzenesulphonate, trifluoromethylbenzenesulphonate, hexafluorophosphate, hexafluoroarsenate or hexafluorosilicate. Most preferred inert current-carrying electrolyte is tetra-n-butylammonium tetrafluoroborate.

When present in the electrochromic composition, the concentration of the inert current-carrying electrolyte is typically from 0.005 to 2 M, preferably from 0.01 to 1 M, more preferably from 0.05 to 0.5 M.

Suitable further additives for the electrochromic medium for the occasionally desired protection against UV light (<350 nm) are for example UV absorbers. Examples are 2,4-dihydroxybenzophenone (UVINUL^{®} 3000, BASF), 2-hydroxy-4-n-octyloxybenzophenone (SANDUVOR^{®} 3035, Clariant), 2-(2H-benzotriazol-2-yl)-6-dodecyl-4-methylphenol (Tinuvin^{®} 571, Ciba), 2,2'-dihydroxy-4-methoxy-benzophenone (Cyasorb 24^{™}, American Cyanamid Company), ethyl 2-cyano-3,3-diphenylacrylate (UVINUL^{®} 3035, BASF 2-ethylhexyl 2-cyano-3,3-diphenyl-acrylate (UVINUL^{®} 3039, BASF), 2-ethylhexyl p-methoxycinnamate (UVINUL^{®} 3088, BASF), 2-hydroxy-4-methoxy-benzophenone (CHIMASSORB^{®} 90, Ciba), dimethyl 4-methoxybenzylidenemalonate (SANDUVOR^{®} PR-25, Clariant).

Further additives for the electrochromic solution may also be selected from permanent dyes or heat stabilizers.

Preferably, all the components of the composition, other than electrochromic compounds, are essentially transparent to visible light so that when the electrochromic compounds are in their bleached state, the composition appears to be essentially transparent to visible light or takes the color of the permanent dyes if present.

According to a second aspect, the present invention relates to an electrochromic device comprising the electrochromic solution as defined in the first aspect.

The electrochromic device comprises a mechanism for holding the solution in a mechanically stable environment.

The electrochromic device comprises at least one transparent electrochromic cell comprising a pair of opposed substrates facing each other and forming a gap, and the gap is filled with the electrochromic solution as defined here above.

More generally all the characteristics described above in connection with the electrochromic solution also apply to the electrochromic device, said electrochromic device being another object of the present invention. Conversely, all the characteristics described below in connection with the device also apply to the electrochromic solution.

Preferably, the electrochromic solution has a neutral colour in the coloured state.

The electrochromic device is selected from optical article such as optical lenses or optical filters or attenuators, windows, visors, goggles, mirrors and displays, preferably optical lenses such as ophthalmic lenses, more preferably ophthalmic lenses and goggles.

Non-limiting examples of ophthalmic lens include corrective and non-corrective lenses, including single vision or multi-vision lenses (i.e afocal, unifocal, bifocal, trifocal and progressive lenses), which may be either segmented or non-segmented, as well as other elements used to correct, protect, or enhance vision, including without limitation contact lenses, intra-ocular lenses, magnifying lenses (such as lenses for contrast enhancement in augmented reality devices or virtual reality devices) and protective lenses (such as sun glasses or sun lenses) or visors. Non-limiting examples of display elements and devices include screens and monitors. Non-limiting examples of windows include automotive, marine and aircraft windows, filters, attenuators, shutters, and optical switches.

The device may contain functional layers such as polarizing layers, photochromic layer, anti-reflecting coatings, visible light and UV absorbing coatings, impact-resistant coatings, abrasion-resistant-coating, anti-smudge-coating, anti-fog coating, anti-dust coating, all of which are familiar to the skilled person. The electrochromic device of the invention may comprise a mechanism for holding the composition in a mechanically stable environment. For example, the electrochromic device of the invention comprises an electrochromic cell including two substrates facing each other. The substrates are preferably optical substrate such as any mineral or organic glass commonly known and used in the optical field. It may be sodocalcic or borosilicate mineral glass for instance. It may be a thermoplastic resin such as a thermoplastic polycarbonate (PC), PET, PEN, PMMA, COC, COP, PVDC, cellulose triacetate or a thermoset or photo-cured resin such as polyurethane, polyurethane/polyurea (such as TRIVEX^{®}) or polythiourethane. In case where the electrochromic device is used as an ophthalmic lens, the substrates used for manufacturing the cell may have a spherical shape or aspheric shape. The internal sides of the substrates may be coated with transparent conductive electrodes ("TCO"). The conductive electrodes may be formed of a transparent conductive material such as, for example indium tin oxide ("ITO"), fluorine-doped tin oxide ("FTO"), aluminium-doped zinc oxide ("AZO"), gallium-doped zinc oxide ("GZO"), indium-doped zinc oxide ("IZO"), aluminium gallium zinc oxide ("AGZO"), indium gallium zinc oxide ("IGZO"). The sheet resistance of these TCO must be below 100 ohm/square, preferably below 40 ohm/square, and even preferably below 10 ohm/square. The substrates may be held at fixed distance from each other, for example with a spacer of 10 µm to 400 µm, preferably of 20 to 250 µm, and more preferably of 150 µm, in order to form a gap wherein the electrochromic composition is introduced.

The electrochromic solution can be, for instance, injected into the electrochromic devices by using either a vacuum backfilling process or a one-drop filling process. When vacuum backfilling process is used to inject the solution into the cell, it is preferable to make cells with only one hole. Furthermore, in such case, when vacuum backfilling process is used, the additive used shows preferably a high boiling point, has preferably a boiling point higher than 100 °C. Additives with a boiling point lower than 100 °C are difficult to manage.

Another device of the present invention comprises an optical component provided with at least one transparent cell arrangement juxtaposed in a parallel direction to the surface thereof, as disclosed in WO 2006/013250, each cell being tightly closed and containing said fluid, mesomorphous or gel host medium and said at least one compound of the present invention. Other devices according to the invention can be a device as described in FR 2937154 or FR 2950710 comprising at least one compound of the invention.

According to a third aspect, the invention relates to the use of a mixture consisting of a thickening polymer agent having a molecular weight of at least 50,000 g/mol, preferably of at least 200,000 g/mol and additive having a molecular weight between 300 and 50,000 g/mol in an electrochromic solution according as defined here above for reducing leakage current and color segregation.

### EXAMPLE

This invention will be further illustrated by the following non-limiting examples which are given for illustrative purposes only and should not restrict the scope of the appended claims.

Four electrochromic samples have been made with four different electrochromic solutions to demonstrate the effect of the combination of the two types of compounds, the thickening polymer agent and the additives on both the leakage current/ bleaching rate and viscosity.

Solution 1 was prepared by dissolving, in propylene carbonate (98,96 wt%):
- the electrochromic reducing compound 10-methylphenothiazine (0,35 wt.%),
- the electrochromic oxidizing compound ethyl viologen diperchlorate (0,69 wt.%).

Solution 2 was prepared by dissolving, in propylene carbonate (90,96wt %):
- the electrochromic reducing compound 10-methylphenothiazine (0,35 wt.%),
- the electrochromic oxidizing compound ethyl viologen diperchlorate (0,69 wt.%),
- the thickening polymer agent PVAC (8 wt.%).

Solution 3 was prepared by dissolving, in propylene carbonate (86,96 wt.%):
- the electrochromic reducing compound 10-methylphenothiazine (0,35 wt.%),
- the electrochromic oxidizing compound ethyl viologen diperchlorate (0,69 wt.%)
- the thickening polymer agent PVAC (12 wt.%).

Solution 4 was prepared by dissolving, in propylene carbonate (70,96 wt.%):
- the electrochromic reducing compound 10-methylphenothiazine (0,35 wt.%),
- the electrochromic oxidizing compound ethyl viologen diperchlorate (0,69 wt.%)
- the thickening polymer agent PVAC (8 wt.%),
- the additive polyethylene glycol dibenzoate (PEGDB) in liquid form (20 wt.%).

Propylene carbonate, ethyl violologen diperchlorate, 10-methylphenothiazine are sold by Sigma Aldrich.

The PVAC used is sold under the name Vinnapas UW25FS by Wacker. It has a molecular weight of 540,000 g/mol measured by SEC, PS-Standard.

The PEGDB used is Poly(ethylene glycol) dibenzoate sold by Sigma Aldrich having a molecular weight of 410 g/mol and a boiling point of 217°C .

A tank was filled at room temperature and atmospheric pressure with the electrochromic solutions 1 to 4 as described above. A cell was then placed vertically in the tank under atmospheric pressure in such way that the opening was located above the solution level. This cell included two mineral glass substrates facing each other, the internal sides of which were coated with transparent conductive electrodes made of indium tin oxide (ITO). The substrates were held at fixed distance from one another by using spacers of 150 µm, in order to form a gap. The edge of the cell was sealed with a UV curable adhesive in such a way that an opening of 5 mm was left.

The tank with the cell was placed in a vacuum-desiccator, which was evacuated to 0.5 mBar. During the aeration of the tank under the introduction of an inert gas, the electrochromic formulation filled the entire volume of the gap through the opening. The opening was then sealed with a UV curable adhesive in order to make the cell hermetic. The electrical connection was made by two silver plated copper wires, sealed on each ITO glass substrate with a silver charged epoxy adhesive.

Current consumption is measured with a common amperometer, when the current stabilizes typically after one minute.

The viscosity is measured by using a Brookfield viscosimeter.

The sample is put in a spectrophotometer and the bleaching rate is the time measured at from the higher value of visual transmission (Tv= 85%) to reach 10% of transmission (Tv) under activation. Applied voltage is 1,2V to reach 10% of transmission.

The results regarding current consumption, bleaching rate and viscosity are provided in Table 1.

**TABLE 1**

| | Current consumption (mA) | Bleaching rate (s) | Viscosity (cP) at 25 °C |
|---|---|---|---|
| Solution 1 | 16,5mA | 8 | 3 |
| Solution 2 | 12,3mA | 13 | 420 |
| Solution 3 | 9,1mA | 15 | 2500 |
| Solution 4 (invention) | 6,25mA | 21 | 1000 |

Solution 1 containing only solvent and electrochromic compounds (methylphenothiazine and ethyl viologen diperchlorate) show a high current consumption. The segregating effect is visible after 1 hour.

PVAC at 8 wt% and 12 wt% is added to solutions 2 and 3. It is thus observed that the leakage current is reduced and the viscosity increases, especially when PVAC is added at 12 wt%. In the latter case a viscosity of 2500 cP is considered to be a very high value. In both of these cases, the segregation effect is removed and current decreases.

In solution 4, by adding 8 wt% of PVAC and 20 wt% of liquid PEGDB, segregation is removed; the current consumption is strongly reduced with a moderate increase of the viscosity compared to sample with solution 3. The addition of PEGDB increase the viscosity from 420 to 1000 cP measured at 25 °C;

Thus, the inventive solution 4 strikes a good balance between leakage current/ bleaching rate and viscosity due to the synergetic effect obtained from the use of the thickening polymer agent and additive.

## Claims

1. Electrochromic solution comprising:
- a solvent;
- a thickening polymer agent having a molecular weight of at least 200,000 g/mol;
- at least one additive having a molecular weight between 300 and 50,000 g/mol;
- a redox chemical mixture in solution in said solvent said mixture being constituted of at least one electrochromic reducing compound and at least one electrochromic oxidizing compound, and which colors in the presence of an applied voltage and which bleaches to a colorless condition in the absence of an applied voltage.

2. The electrochromic solution according to claim 1, wherein the solvent is selected from ethylene carbonate, propylene carbonate, γ-butyrolactone, γ-valerolactone, acetronitrile, propionitrile, benzonitrile, glutaronitrile, methylglutaronitrile, dimethylformamide, N-methylpyrrolidone, sulfolane, 3-methyl sulfolane, methyl propionate, ethylene glycol, ethylene carbonate, propylene glycol diacetate, propylene glycol methyl ether acetate, ionic liquids, and mixtures thereof, preferably the solvent is propylene carbonate.

3. The electrochromic solution according to claims 1 or 2, wherein the thickening polymer agent is a vinyl acetate polymer.

4. The electrochromic solution according to any one of claims 1 to 3, wherein the at least one additive is chosen from an ester derivative of benzoic acid or an ester derivative of phthalic acid or a mixture thereof.

5. The electrochromic solution according to any one of claims 1 to 4, wherein the at least one additive is chosen from an ester derivative of benzoic acid of formula (I) or (II) 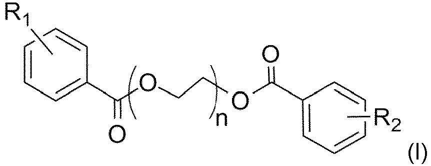 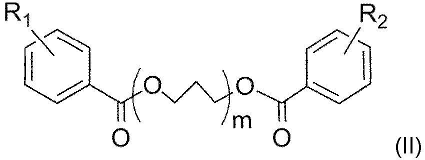
wherein R1 and R2 are similar or different and are selected from **H,** optionally substituted alkyl (such as optionally substituted arylalkyl), optionally substituted aryl, optionally substituted cycloalkyl
wherein n is an integer ranging from 1 to 10, preferably from 1 to 7 and
wherein m is an integer ranging from 1 to 10, preferably from 1 to 7;
preferably the additive is selected from a list of ester derivatives of benzoic acid consisting of polypropylene glycol dibenzoate (PPGDB) such as dipropylene glycol dibenzoate (DPGDB) and tripropylene glycol dibenzoate (TPGDB), polyethylene glycol dibenzoate (PEGDB) such as diethylene glycol dibenzoate (DEGDB) and triethylene glycol dibenzoate (TEGDB) and a mixture thereof.

6. The electrochromic solution according to any one of claims 1 to 4, wherein the at least an additive is selected from a list of ester derivatives of phthalic acid consisting of bis (2-ethylhexyl phthalate) (DEHP), diisononyl phthalate (DINP), dioctyl phthalate (DNOP), diisodecyl phthalate (DIDP), dipropylheptyl phthalate (DPHP), di-2-ethylhexyl terephthalate (DOTP or DEHT) and a mixture thereof.

7. The electrochromic solution according to any one of claims 1 to 4, wherein the at least an additive is selected from a list of glycol derivatives such as polyethylene glycol diacrylate (or methacrylate), polyethylene glycol diepoxy, polypropylene glycol diacrylate (or methacrylate), polypropylene glycol diepoxy and mixture thereof.

8. The electrochromic solution according to any one of claims 1 to 4, wherein the at least one additive is selected from a list of low molecular weight polymers such as poly(methyl methacrylate) (PMMA), polyvinyl acetate (PVA), polyvinyl butyral (PVB), cellulose acetate butyrate (CAB) and mixture thereof.

9. The electrochromic solution according to any one of claims 1 to 8, wherein said electrochromic solution comprises at least two additives independently chosen from the group consisting of ester derivatives of benzoic acid, ester derivatives of phthalic acid, glycol derivatives and low molecular weight polymers.

10. The electrochromic solution according to any one of claims 1 to 9, wherein the content of the additive is from 5 to 60 wt%, preferably from 10 to 30 wt%, more preferably from 15 to 25 wt%, % by weight relative to the total weight of the electrochromic solution and wherein the content of the thickening polymer agent is from 1 to 30 wt%, preferably from 3 to 20 wt%, more preferably from 5 to 15 wt%, % by weight relative to the total weight of the electrochromic solution.

11. The electrochromic solution according to any one of claims 1 to 10, wherein the thickening polymer agent is a vinyl acetate polymer present from 5 to 15 wt% by weight relative to the total weight of the electrochromic solution and the additive is polypropylene glycol dibenzoate or polyethylene glycol dibenzoate present from 15 to 25 wt% by weight relative to the total weight of the electrochromic solution.

12. The electrochromic solution according to any one of claims 1 to 11, wherein the at least one electrochromic reducing compound is selected from ferrocene and their derivatives such as ethyl ferrocene, t-butyl ferrocene, phenoxazine and their derivatives, such as N-benzylphenoxazine, phenazine and their derivatives, such as 5,10-dihydrophenazine, N,N,N',N'-tetramethyl-p-phenylenediamine, phenothiazine and their derivatives, such as 10-methylphenothiazine and isopropylphenothiazine; thioanthrene; and tetrathiafulvalene.

13. The electrochromic solution according to any one of claims 1 to 12, wherein the at least one electrochromic oxidizing compound is selected from alkylviologens, arylviologens, arylalkylviologens, alkylarylviologens, or anthraquinone and derivatives thereof.

14. Electrochromic device comprising the solution as defined in any one of claims 1 to 13.

15. The electrochromic device according to claim 14, wherein said electrochromic device is selected from optical article such as optical lenses, optical filters, attenuators, windows, visors, goggles, mirrors and displays, preferably optical lenses, more preferably ophthalmic lenses and goggles.

## Patentansprüche

1. Elektrochrome Lösung, umfassend:
- ein Lösungsmittel;
- ein polymeres Verdickungsmittel mit einem Molekulargewicht von mindestens 200.000 g/mol;
- mindestens ein Additiv mit einem Molekulargewicht zwischen 300 und 50.000 g/mol;
- eine Redoxchemikalienmischung in Lösung in dem Lösungsmittel, wobei die Mischung aus mindestens einer elektrochromen reduzierenden Verbindung und mindestens einer elektrochromen oxidierenden Verbindung besteht und in Gegenwart einer angelegten Spannung farbig wird und in Abwesenheit einer angelegten Spannung zu einem farblosen Zustand ausbleicht.

2. Elektrochrome Lösung nach Anspruch 1, wobei das Lösungsmittel aus Ethylencarbonat, Propylencarbonat, γ-Butyrolacton, γ-Valerolacton, Acetronitril, Propionitril, Benzonitril, Glutaronitril, Methylglutaronitril, Dimethylformamid, N-Methylpyrrolidon, Sulfolan, 3-Methylsulfolan, Methylpropionat, Ethylenglykol, Ethylencarbonat, Propylenglykoldiacetat, Propylenglykolmethyletheracetat, ionischen Flüssigkeiten und Mischungen davon ausgewählt ist und es sich bei dem Lösungsmittel vorzugsweise um Propylencarbonat handelt.

3. Elektrochrome Lösung nach Anspruch 1 oder 2, wobei es sich bei dem polymeren Verdickungsmittel um ein Vinylacetat-Polymer handelt.

4. Elektrochrome Lösung nach einem der Ansprüche 1 bis 3, wobei das mindestens eine Additiv aus einem Esterderivat der Benzoesäure oder einem Esterderivat der Phthalsäure oder einer Mischung davon gewählt ist.

5. Elektrochrome Lösung nach einem der Ansprüche 1 bis 4, wobei das mindestens eine Additiv aus einem Esterderivat von Benzoesäure der Formel (I) oder (II) gewählt ist: 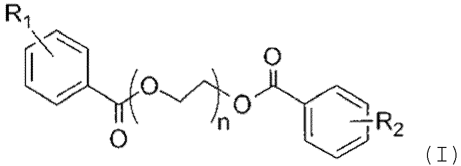 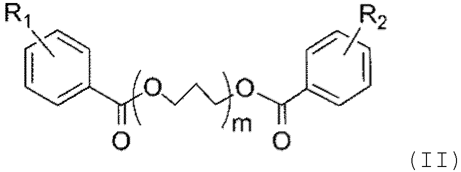
wobei R1 und R2 gleich oder verschieden sind und aus **H,** gegebenenfalls substituiertem Alkyl (wie gegebenenfalls substituiertem Arylalkyl), gegebenenfalls substituiertem Aryl und gegebenenfalls substituiertem Cycloalkyl ausgewählt sind,
wobei n für eine ganze Zahl im Bereich von 1 bis 10, vorzugsweise von 1 bis 7, steht und
wobei m für eine ganze Zahl im Bereich von 1 bis 10, vorzugsweise von 1 bis 7, steht;
das Additiv vorzugsweise aus einer Liste von Esterderivaten der Benzoesäure bestehend aus Polypropylenglykoldibenzoat (PPGDB) wie Dipropylenglykoldibenzoat (DPGDB) und Tripropylenglykoldibenzoat (TPGDB), Polyethylenglykoldibenzoat (PEGDB) wie Diethylenglykoldibenzoat (DEGDB) und Triethylenglykoldibenzoat (TEGDB) und einer Mischung davon ausgewählt ist.

6. Elektrochrome Lösung nach einem der Ansprüche 1 bis 4, wobei das mindestens eine Additiv aus einer Liste von Esterderivaten der Phthalsäure bestehend aus Bis(2-ethylhexylphthalat) (DEHP), Diisononylphthalat (DINP), Dioctylphthalat (DNOP), Diisodecylphthalat (DIDP), Dipropylheptylphthalat (DPHP), Di-2-ethylhexylterephthalat (DOTP oder DEHT) und einer Mischung davon ausgewählt ist.

7. Elektrochrome Lösung nach einem der Ansprüche 1 bis 4, wobei das mindestens eine Additiv aus einer Liste von Glykolderivaten wie Polyethylenglykoldiacrylat (oder - methacrylat), Polyethylenglykoldiepoxy, Polypropylenglykoldiacrylat (oder -methacrylat), Polypropylenglykoldiepoxy und einer Mischung davon ausgewählt ist.

8. Elektrochrome Lösung nach einem der Ansprüche 1 bis 4, wobei das mindestens eine Additiv aus einer Liste von niedermolekularen Polymeren wie Poly(methylmethacrylat) (PMMA), Polyvinylacetat (PVA), Polyvinylbutyral (PVB), Celluloseacetatbutyrat (CAB) und einer Mischung davon ausgewählt ist.

9. Elektrochrome Lösung nach einem der Ansprüche 1 bis 8, wobei die elektrochrome Lösung mindestens zwei Additive umfasst, die unabhängig aus der Gruppe bestehend aus Esterderivaten der Benzoesäure, Esterderivaten der Phthalsäure, Glykolderivaten und niedermolekularen Polymeren gewählt sind.

10. Elektrochrome Lösung nach einem der Ansprüche 1 bis 9, wobei der Gehalt des Additivs 5 bis 60 Gew.-%, bevorzugt 10 bis 30 Gew.-%, weiter bevorzugt 15 bis 25 Gew.-%, Gew.-%, bezogen auf das Gesamtgewicht der elektrochromen Lösung, beträgt und wobei der Gehalt des polymeren Verdickungsmittels 1 bis 30 Gew.-%, bevorzugt 3 bis 20 Gew.-%, weiter bevorzugt 5 bis 15 Gew.-%, Gew.- %, bezogen auf das Gesamtgewicht der elektrochromen Lösung, beträgt.

11. Elektrochrome Lösung nach einem der Ansprüche 1 bis 10, wobei es sich bei dem polymeren Verdickungsmittel um ein Vinylacetatpolymer, das in einer Menge von 5 bis 15 Gew.-%, bezogen auf das Gesamtgewicht der elektrochromen Lösung, vorliegt, handelt und es sich bei dem Additiv um Polypropylenglykoldibenzoat oder Polyethylenglykoldibenzoat, das in einer Menge von 15 bis 25 Gew.-%, bezogen auf das Gesamtgewicht der elektrochromen Lösung, vorliegt, handelt.

12. Elektrochrome Lösung nach einem der Ansprüche 1 bis 11, wobei die mindestens eine elektrochrome reduzierende Verbindung aus Ferrocen und dessen Derivaten wie Ethylferrocen, t-Butylferrocen, Phenoxazin und dessen Derivaten, wie N-Benzylphenoxazin, Phenazin und dessen Derivaten, wie 5,10-Dihydrophenazin, N,N,N',N'-Tetramethyl-p-phenylendiamin, Phenothiazin und dessen Derivaten, wie 10-Methylphenothiazin und Isopropylphenothiazin; Thioanthren und Tetrathiafulvalen ausgewählt ist.

13. Elektrochrome Lösung nach einem der Ansprüche 1 bis 12, wobei die mindestens eine elektrochrome oxidierende Verbindung aus Alkylviologenen, Arylviologenen, Arylalkylviologenen, Alkylarylviologenen oder Anthrachinon und Derivaten davon ausgewählt ist.

14. Elektrochrome Vorrichtung, umfassend die Lösung gemäß einem der Ansprüche 1 bis 13.

15. Elektrochrome Vorrichtung nach Anspruch 14, wobei die elektrochrome Vorrichtung aus optischen Gegenständen, wie optischen Linsen, optischen Filtern, Dämpfungselementen, Fenstern, Visieren, Brillen, Spiegeln und Anzeigen, vorzugsweise optischen Linsen, besonders bevorzugt ophthalmischen Linsen und Brillen, ausgewählt ist.

## Revendications

1. Solution électrochromique comprenant :
- un solvant ;
- un agent polymère épaississant ayant un poids moléculaire d'au moins 200 000 g/mole ;
- au moins un additif ayant un poids moléculaire compris entre 300 et 50 000 g/mole ;
- un mélange chimique redox en solution dans ledit solvant, ledit mélange étant constitué d'au moins un composé réducteur électrochromique et d'au moins un composé oxydant électrochromique, et qui se colore en présence d'une tension appliquée et qui se décolore jusqu'à un état incolore en l'absence d'une tension appliquée.

2. Solution électrochromique selon la revendication 1, dans laquelle le solvant est choisi parmi le carbonate d'éthylène, le carbonate de propylène, la γ-butyrolactone, la γ-valérolactone, l'acétonitrile, le propionitrile, le benzonitrile, le glutaronitrile, le méthylglutaronitrile, le diméthylformamide, la N-méthylpyrrolidone, le sulfolane, le 3-méthyl sulfolane, le propionate de méthyle, l'éthylène glycol, le carbonate d'éthylène, le diacétate de propylène glycol, l'acétate d'éther méthylique de propylène glycol, les liquides ioniques, et des mélanges de ceux-ci, de préférence le solvant est le carbonate de propylène.

3. Solution électrochromique selon la revendication 1 ou 2, dans laquelle l'agent polymère épaississant est un polymère d'acétate de vinyle.

4. Solution électrochromique selon l'une quelconque des revendications 1 à 3, dans laquelle l'au moins un additif est choisi parmi un dérivé ester d'acide benzoïque ou un dérivé ester d'acide phtalique ou un mélange de ceux-ci.

5. Solution électrochromique selon l'une quelconque des revendications 1 à 4, dans laquelle l'au moins un additif est choisi parmi un dérivé ester d'acide benzoïque de formule (I) ou (II) 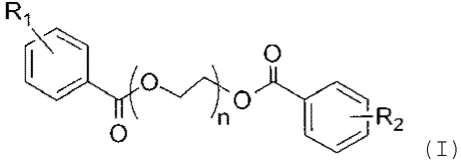 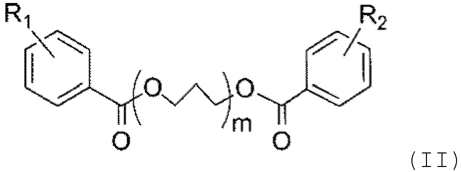
dans laquelle R1 et R2 sont similaires ou différents et sont choisis parmi H, alkyle éventuellement substitué (tel qu'arylalkyle éventuellement substitué), aryle éventuellement substitué, cycloalkyle éventuellement substitué
dans laquelle n est un entier allant de 1 à 10, de préférence de 1 à 7 et
dans laquelle m est un entier allant de 1 à 10, de préférence de 1 à 7 ;
de préférence, l'additif est choisi dans une liste de dérivés esters de l'acide benzoïque constituée par le dibenzoate de polypropylène glycol (PPGDB) tel que le dibenzoate de dipropylène glycol (DPGDB) et le dibenzoate de tripropylène glycol (TPGDB), le dibenzoate de polyéthylène glycol (PEGDB) tel que le dibenzoate de diéthylène glycol (DEGDB) et le dibenzoate de triéthylène glycol (TEGDB) et un mélange de ceux-ci.

6. Solution électrochromique selon l'une quelconque des revendications 1 à 4, dans laquelle l'au moins un additif est choisi dans une liste de dérivés esters de l'acide phtalique constituée par le phtalate de bis(2-éthylhexyle) (DEHP), le phtalate de diisononyle (DINP), le phtalate de dioctyle (DNOP), le phtalate de diisodécyle (DIDP), le phtalate de dipropylheptyle (DPHP), le téréphtalate de di-2-éthylhexyle (DOTP ou DEHT) et un mélange de ceux-ci.

7. Solution électrochromique selon l'une quelconque des revendications 1 à 4, dans laquelle l'au moins un additif est choisi dans une liste de dérivés de glycol tels que le diacrylate (ou méthacrylate) de polyéthylène glycol, le diépoxy polyéthylène glycol, le diacrylate (ou méthacrylate) de polypropylène glycol, le diépoxy polypropylène glycol et un mélange de ceux-ci.

8. Solution électrochromique selon l'une quelconque des revendications 1 à 4, dans laquelle l'au moins un additif est choisi dans une liste de polymères à faible poids moléculaire tels que le poly(méthacrylate de méthyle) (PMMA), le poly (acétate de vinyle) (PVA), le poly(vinybutyral) (PVB), l'acétate butyrate de cellulose (CAB) et un mélange de ceux-ci.

9. Solution électrochromique selon l'une quelconque des revendications 1 à 8, dans laquelle ladite solution électrochromique comprend au moins deux additifs choisis indépendamment dans le groupe constitué par les dérivés esters de l'acide benzoïque, les dérivés esters de l'acide phtalique, les dérivés de glycol et les polymères à faible poids moléculaire.

10. Solution électrochromique selon l'une quelconque des revendications 1 à 9, dans laquelle la teneur de l'additif est de 5 à 60 % en poids, de préférence de 10 à 30 % en poids, plus préférablement de 15 à 25 % en poids, par rapport au poids total de la solution électrochromique et dans laquelle la teneur de l'agent polymère épaississant est de 1 à 30 % en poids, de préférence de 3 à 20 % en poids, plus préférablement de 5 à 15 % en poids, les % en poids étant par rapport au poids total de la solution électrochromique.

11. Solution électrochromique selon l'une quelconque des revendications 1 à 10, dans laquelle l'agent polymère épaississant est un polymère d'acétate de vinyle présent de 5 à 15 % en poids par rapport au poids total de la solution électrochromique et l'additif est le dibenzoate de polypropylène glycol ou le dibenzoate de polyéthylène glycol présent de 15 à 25 % en poids par rapport au poids total de la solution électrochromique.

12. Solution électrochromique selon l'une quelconque des revendications 1 à 11, dans laquelle l'au moins un composé réducteur électrochromique est choisi parmi le ferrocène et ses dérivés tels que l'éthylferrocène, le t-butylferrocène, la phénoxazine et ses dérivés tels que la N-benzylphénoxazine, la phénazine et ses dérivés tels que la 5,10-dihydrophénazine, la N,N,N',N'-tétraméthyl-p-phénylènediamine, la phénothiazine et ses dérivés tels que la 10-méthylphénothiazine et l'isopropylthiazine ; le thioanthrène ; et le tétrathiafulvalène.

13. Solution électrochromique selon l'une quelconque des revendications 1 à 12, dans laquelle l'au moins un composé oxydant électrochromique est choisi parmi les alkylviologènes, les arylviologènes, les arylalkylviologènes, les alkylarylviologènes, ou l'anthraquinone et les dérivés de ceux-ci.

14. Dispositif électrochromique comprenant la solution telle que définie dans l'une quelconque des revendications 1 à 13.

15. Dispositif électrochromique selon la revendication 14, dans lequel ledit dispositif électrochromique est choisi parmi des articles optiques tels que des lentilles optiques, des filtres optiques, des atténuateurs, des fenêtres, des visières, des lunettes de protection, des miroirs et des affichages, de préférence des lentilles optiques, plus préférablement des lentilles ophtalmiques et des lunettes de protection.
